# EUROPEAN PATENT APPLICATION

(11) **EP 3 587 183 A1**
(43) Date of publication of application: **01.01.2020**
(21) Application number: 18382489.5
(22) Date of filing: 29.06.2018
(51) Int. Cl.: B60Q 1/068, F16C 11/06

(54) **LIGHTING MODULE ADJUSTER AND AUTOMOTIVE LIGHTING DEVICE**

(71) Applicant: Valeo Iluminacion, 23600 Martos (ES)
(72) Inventor: RUIZ, Francisco, 23600 MARTOS (ES); FERNANDEZ, Ricardo, 23600 MARTOS (ES); RUBIA, Juan-Antonio, 23600 MARTOS (ES); CESPEDES, Francisco, 23600 MARTOS (ES)
(74) Representative: Valeo Vision

(57) **Abstract**

The invention refers to an adjuster (1) for adjusting the position of an adjustable part (121) of an automotive lighting device (10). This adjuster (1) comprises a shaft (2) with a first end (21) and a second end (22), the shaft (2) comprising an outer threaded surface (23) and an adjusting element (4), the outer threaded surface (23) being intended to be threaded to the adjustable part (121). The adjuster (1) further comprises a connector (3) located in the second end (22) of the shaft (2), the connector (3) being for attaching the adjuster (1) to an aiming system (6) of a housing of the automotive lighting device (10). The adjusting element (4) is accessible from the first end (21) of the shaft (2). The invention also provides an automotive lighting device (10) comprising such an adjuster (1).

## Description

### TECHNICAL FIELD

This invention belongs to the field of module adjusters as the ones used in adjusting automotive parts such as headlamps.

### STATE OF THE ART

Lighting devices, such as headlamps, the same as other automotive parts, usually require some linear setting.

This setting is carried out by means of adjusters. These pieces usually comprise a shaft which is able to move linearly. By this linear movement of the shaft, and a balancing rod connected to the end of the shaft and to the piece to be adjusted, the latter may be adjusted.

In these adjusters, the shaft is usually moved by a gear movement: the shaft comprises a threaded portion and comprises an actuating portion, which is accessible from outside the housing. This interaction forces the device to have a waterproof cap which is removed when the module needs adjusting. This has a direct impact on the design, cost and size of the lighting device.

An alternative device for such purpose is provided by the present invention. This alternative device aims at reducing the cost and size of the lighting device, thus achieving a simpler device and a less expensive manufacturing and maintenance.

### DESCRIPTION OF THE INVENTION

The invention provides a solution for this problem by means of a lighting module adjuster according to claim 1 and a lighting device according to claim 7. Preferred embodiments of the invention are defined in dependent claims.

In a first inventive aspect, the invention provides an adjuster for adjusting the position of an adjustable part of an automotive lighting device, the adjuster comprising
a shaft with a first end and a second end, the shaft comprising an outer threaded surface and an adjusting element; and
a connector located in the second end of the shaft, the connector being for attaching the adjuster to an aiming system of a housing of the automotive lighting device;
wherein the adjusting element is accessible from the first end of the shaft.

The position of this adjuster may be regulated in an easy way without making any further opening in the hosing of an automotive lighting device. With this invention, the adjusting element, when operated, acts as a screw head for the whole adjuster, so that when the adjusting element is turned, the whole adjuster is turned and, when the outer threaded surface of the shaft is threaded into an adjustable part, it goes back or forth with respect to said adjustable part but, since the shaft is connected to the aiming system of the housing, it is the adjustable part which moves back and forth with respect to this housing.

In different embodiments, this adjusting element may comprise a cavity or a protrusion or just a slot, as far as it may be operated by any external tool to cause the rotation of the shaft.

In some particular embodiments, the shaft further comprises an abutment washer located in the first end of the shaft, the abutment washer being intended to abut against a surface and thus provide a limited hidden position for the adjuster.

This abutment washer is not necessary in every embodiment, but provides a way of avoiding that the adjuster may accidentally separate from the adjustable part, if an excessive movement is applied on the adjusting element.

In some particular embodiments, the adjusting element is also accessible from the second end of the shaft.

In these embodiments, the fact that the adjusting element may be accessible also from the second end leads to a more versatile device, which may be used for the arrangement of a wide range of lighting devices.

In some particular embodiments, the connector comprises either a ball-shaped end or a ball-socket joint.

The connector is intended to match with the aiming system of a housing. The adjuster is usually attached to this housing by means of a ball-socket joint, because it usually needs to be able to be regulated in different directions. The ball-socket may be on the housing or on the adjuster, while the corresponding element is located on the other part.

In some particular embodiments, the shaft further comprises a final abutment located in the second end of the shaft, the final abutment being intended to abut against a surface and provide a limited extended position for the adjuster.

The same as the abutment washer was intended to avoid excessive offset of the adjuster in one direction, the final abutment is intended to avoid excessive offset of the adjuster in the opposite direction, so that the adjuster is always comprised between two extreme positions.

In some particular embodiments, the adjusting element comprises a cross-headed screw.

The cross headed screw is an easy way of providing regulation for the adjusting protrusion. A screw driver may be therefore inserted by the first end of the shaft to reach the adjusting element and operate on its cross-headed screw to make it rotate so that the position between the adjustable part and the housing varies.

In a further inventive aspect, the invention provides a lighting device comprising a housing with an aiming system, a lighting module with an adjusting portion and an adjuster according to the preceding inventive aspect, wherein
the connector of the adjuster connects the shaft to the aiming system of the housing; and
the outer threaded surface of the shaft is threaded in the adjusting portion of the lighting module.

In this lighting device, the advantages of the adjuster according to the invention are fully operative, since the position of the lighting module, which may need to be regulated, is easily varied without a further opening in the housing or in the lighting module itself, just acceding the adjusting element even if the lighting module has already been installed on the housing of the lighting device.

The adjusting portion of the lighting module may be a portion or a different element which is installed in the lighting module. In some embodiments, this adjusting element comprises a reflector. In different particular embodiments, this adjusting element comprises a bracket. These elements are very common in lighting devices, and suits well with the arrangement of the lighting device according to the invention. The adjusting portion is therefore solidly connected to the rest of the lighting module, since when the adjuster is activated, the adjusting portion receives the adjusting movement and transmits it to the rest of the lighting module.

In some particular embodiments, the adjusting portion comprises an auxiliary threaded sleeve, which is attached to the rest of the adjusting portion and comprises an internal threaded portion, adapted to receive the outer threaded surface of the adjuster.

Sometimes, the adjuster is not arranged directly on the lighting module, but on an auxiliary threaded sleeve. This auxiliary sleeve has the aim of being replaced in the event it is damaged.

In some particular embodiments, the lighting device is either a headlamp or a foglamp. These types of lighting devices usually comprise elements which needs regulation, so they suit very well with the spirit of the adjuster according to the invention.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows an exploded view of a particular embodiment of an adjuster according to the invention.
Figure 2 shows an assembled view of the adjuster 1 of Figure 1.
Figure 3 shows a cross-section view of this particular embodiment of an adjuster, according to the cross-section direction A-A of Figure 2.
Figure 4 shows a perspective view of a detail of an adjuster according to the invention.
Figure 5 shows a lighting device according to the invention comprising such an adjuster.
Figure 6 shows the lighting device according to the previous figure installed in an automotive vehicle.

### DETAILED DESCRIPTION OF THE INVENTION

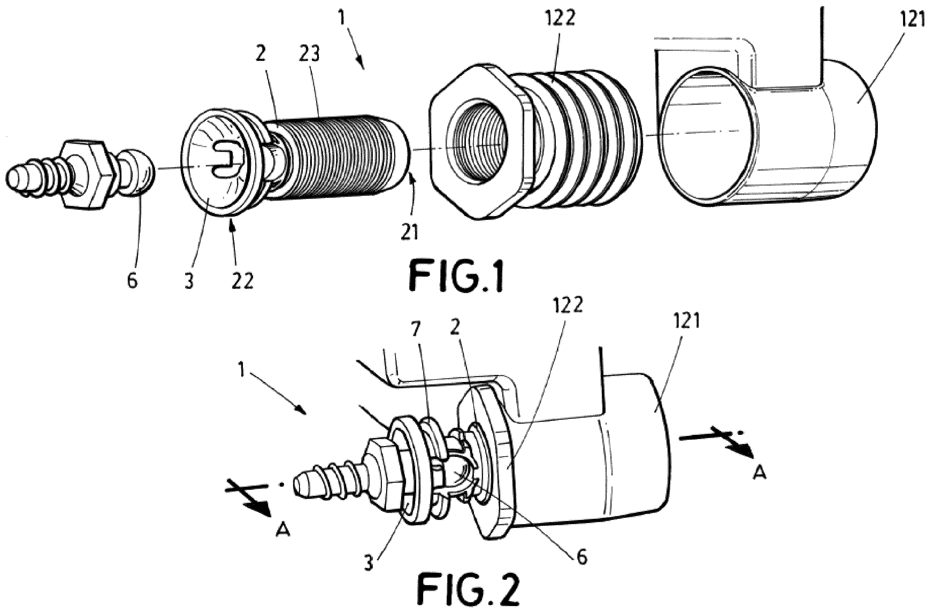

Figure 1 shows an exploded view of a particular embodiment of an adjuster 1 according to the invention.

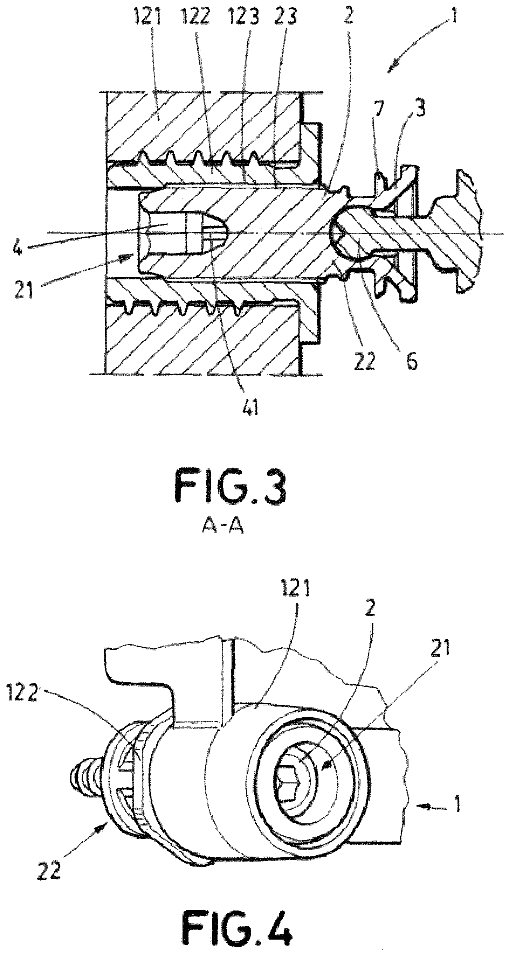

The adjuster 1 is an element which is intended to provide a position regulation for a lighting module with respect to the housing of a lighting device. In this figure, an adjusting portion 121 of the lighting module is shown. The adjuster 1 comprises a shaft 2 and a ball-socket 3. The shaft is intended to be screwed into the adjusting portion and the ball socket is intended to be connected to a ball stud 6 which belongs to the housing. Due to this connection, the shaft 2 is kept at a constant distance from the housing, but since the shaft 2 is screwed into the adjusting portion 121, when the shaft 2 rotates, the adjusting portion 121 may move back and forth with respect to the housing, thus achieving a position regulation. To carry out this rotation of the shaft 2, internal means are provided, as shown in Figure 3.

In this particular embodiment shown in Figure 1, the shaft 2 is not directly threaded into the adjusting portion 121, although in other embodiments of the invention it may be. In this case, an auxiliary sleeve 122 is arranged between the outer threaded surface 23 of the shaft 2 and the adjusting portion 121. This auxiliary sleeve 122 comprises an internal threaded portion 123, which is adapted to receive the outer threaded surface 23 of the shaft 2 of the adjuster 1.

Figure 2 shows an assembled view of the adjuster 1 of Figure 1.

Figure 3 shows a cross-section view of this particular embodiment of an adjuster, according to the cross-section direction A-A of Figure 2.

As may be seen in this cross-section view, the shaft 2 comprises a first end 21, a second end 22 and an outer threaded surface 23, and there is an adjusting cavity 4 which is dug into the shaft 2.

The shaft 2 is therefore partially hollow, since the adjusting cavity 4 is accessible from the first end 21 of the shaft. In different embodiments, this adjusting element does not need to be a cavity; it may be a protrusion or just a slot, as far as it may be operated by any element to cause the rotation of the shaft. This shaft 2 also comprises a second end 22, where the ball-socket 3 is located. This ball-socket 3 is intended to be connected to a ball stud 6 belonging to the housing.

Since the adjusting cavity 4 is accessible from the first open end 21, when the adjuster 1 is mounted on the lighting device, there is no need for a back opening in the housing to access the adjusting element, since this adjusting element, which in this case is an adjusting cavity, is perfectly accessible from the first end 21 of the shaft 2, and its position may be regulated without disassembling or even touching the corresponding lighting module.

The shaft 2 also comprises an abutment element that limits the movement of this shaft 2 so that it does not exceed an extreme position. This abutment element is an abutment washer 7, which limits the entrance of the shaft inside the auxiliary element 122 where this shaft 2 is screwed.

The adjusting protrusion 4 comprises a cross-headed screw 41. This cross-headed screw 41 may be easily operated by a screw driver to cause the rotation of the whole adjuster 1 and, therefore, its longitudinal regulation. When this cross-headed screw 41 is rotated, the shaft 2 rotates with respect to the ball stud 6 but, as it is connected to it, it does not move back and forth. This back and forth movement is transmitted to the auxiliary sleeve 122, which is solidly arranged in the adjusting portion 121, so that the back and forth movement is transmitted to the adjusting portion 121 of the lighting module, which follows this movement until its correct position.

Figure 4 shows how the first end 21 of the shaft 2 is accessible when the adjuster 1 is assembled.

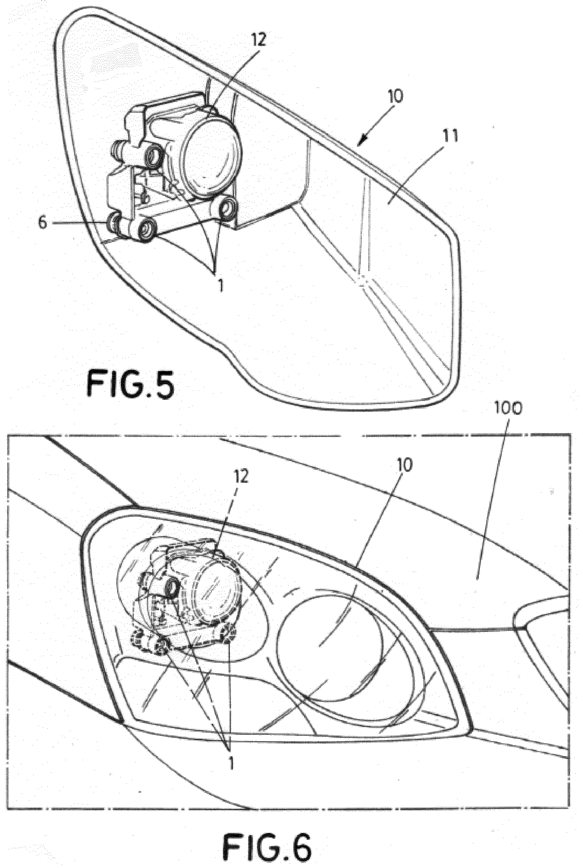

Figure 5 shows a lighting device 10 according to the invention comprising such an adjuster.

This lighting device 10 comprises a housing 11, a lighting module 12 and three adjusters 1 according to the invention, wherein
each adjuster 1 is partially threaded into the adjusting portion of the lighting module 12; and
the housing comprises a ball stud 6 which is coupled to the ball socket (not seen) of the adjuster 1.

In this lighting device 10, the position of each of the three adjusters may be regulated from the front of the lighting device even if the lighting module 12 is completely installed, and without the need of accessing the shaft from the back of the lighting module 12, which would cause an additional hole in the housing.

Since there are three adjusters 1, and all of them comprise a ball socket connection, the lighting module 12 may be adjusted in position and orientation, since there are three independent distances which may be regulated.

Figure 6 shows the lighting device 10 according to the previous figure installed in an automotive vehicle 100. The lighting device is a headlamp 10 and allows an easy regulation of the position of the adjuster when the light module is installed without making additional openings in the housing.

## Claims

1. An adjuster (1) for adjusting the position of an adjustable part (121) of an automotive lighting device (10), the adjuster (1) comprising
a shaft (2) with a first end (21) and a second end (22), the shaft (2) comprising an outer threaded surface (23) and an adjusting element (4), the outer threaded surface (23) being intended to be threaded to the adjustable part (121); and
a connector (3) located in the second end (22) of the shaft (2), the connector (3) being for attaching the adjuster (1) to an aiming system (6) of a housing of the automotive lighting device (10);
wherein the adjusting element (4) is accessible from the first end (21) of the shaft (2).

2. The adjuster (1) according to claim 1, wherein the adjusting element comprises a cavity or a protrusion or a slot.

3. The adjuster (1) according to any of the preceding claims, wherein the adjusting element (4) is also accessible from the second end (22) of the shaft (2).

4. The adjuster (1) according to any of the preceding claims, wherein the shaft (2) further comprises an abutment washer (7) located in the first end (21) of the shaft (2), the abutment washer (7) being intended to abut against a surface and thus provide a limited hidden position for the adjuster (1).

5. The adjuster (1) according to any of the preceding claims, wherein the connector comprises either a ball-shaped end or a ball-socket joint (3).

6. The adjuster (1) according to any of the preceding claims, wherein the adjusting element (4) comprises a cross-headed screw (41).

7. Automotive lighting device (10) comprising a housing (11) with an aiming system (6), a lighting module (12) with an adjusting portion (121) and an adjuster (1) according to any of the preceding claims, wherein
the connector (3) of the adjuster (1) connects the shaft (2) to the aiming system (6) of the housing (11); and
the outer threaded surface (23) of the shaft (2) is threaded in the adjusting portion (121) of the lighting module (12).

8. Automotive lighting device (10) according to claim 7, wherein the adjusting portion (121) is part of a reflector.

9. Automotive lighting device (10) according to claim 7, wherein the adjusting portion is part of a bracket.

10. Automotive lighting device (10) according to any of claims 7 to 9, wherein the adjusting portion (121) comprises an auxiliary sleeve (122), which is attached to the rest of the adjusting portion and comprises an internal threaded portion (123), adapted to receive the outer threaded surface (23) of the adjuster (1).

11. Automotive lighting device (10) according to any of claims 7 to 10, the lighting device being either a headlamp or a foglamp.
